# DEMANDE DE BREVET EUROPEEN

(11) **EP 1 086 863 A1**
(43) Date de publication de la demande: **28.03.2001**
(21) Numéro de dépôt: 00402641.5
(22) Date de dépôt: 22.09.2000
(51) Int. Cl.: B60R 21/20

(54) **Pièce thermoplastique de masquage d'un coussin gonflable de sécurité**

(30) Priorité: 24.09.1999 FR 9911932
(71) Demandeur: EUROSTYLE (S.A.), F-91370 Verrières le Buisson (FR)
(72) Inventeur: Boulbon, Jack, 36130 Deols (FR)
(74) Mandataire: Viard, Jean

(57) **Abrégé**

Pièce thermoplastique de masquage d'un coussin gonflable de sécurité enfermé dans un support, obtenue par injection, surmoulage, décor dans un moule de forme géométrique créant des zones de réduction d'épaisseur du côté tourné vers le coussin (2) afin que la pression de celui-ci rende possible l'ouverture d'un volet (10) découpant le décor lors du déploiement du coussin tout en maintenant la surface de plastique prédécoupée par une ou des charnières, les zones à déchirer étant obtenues par formation de perforations non débouchantes obtenues de moulage dans le thermoplastique.

## Description

La présente invention a pour objet une pièce thermoplastique pour automobile destinée en particulier, mais non exclusivement, à masquer un coussin gonflable de sécurité.

De telles protections sont de plus en plus répandues et intégrées en différents endroits tels que : planche de bord, panneaux de portes, volant, sièges, etc. De telles pièces ne doivent pas laisser apparaître la zone de déchirement qui, lors du gonflement du coussin dans un laps de temps compatible avec le déploiement de celui-ci, permettra de dégager une surface adaptée telle qu'un volet ou clapet.

Les pièces existant actuellement sont habituellement décorées par thermogainage et sont toutes réalisées avec une zone d'affaiblissement ou de moindre résistance du décor pour faciliter leur déchirement. Cette zone d'affaiblissement est légèrement visible surtout lorsqu'elle est obtenue à la suite d'une reprise.

Un premier objet de l'invention est de pallier cet inconvénient et de permettre la réalisation d'une pièce thermoplastique destinée à renfermer un coussin gonflable de sécurité, disposé dans une zone appropriée, qui ne soit pas visible en partie apparente, le décor restant continu.

Un second objet de l'invention est de réaliser en une seule opération une pièce décorée par le procédé I.S.D d'Injection, Surmoulage, Décor.

Selon l'invention, la pièce thermoplastique de masquage d'un coussin gonflable de sécurité est caractérisée en ce qu'elle est obtenue par injection surmoulage décor dans un moule de forme géométrique permettant d'obtenir des zones de réduction d'épaisseur afin que la pression du coussin gonflable de sécurité, lors de son déploiement dans l'habitacle, rende possible l'ouverture d'un volet découpant ou déchirant le décor.

Toutefois, il ne faut pas que la partie prédécoupée constitue un projectile dur lors du déploiement du coussin gonflable de sécurité. Aussi, la pièce comprend de préférence une ou deux lignes de moindre épaisseur destinées à constituer des charnières permettant au ou aux volets définis dans la pièce de s'ouvrir pour laisser passer le coussin, tout en restant attachée au support dans lequel elle est intégrée.

Selon une autre caractéristique de l'invention, la réduction d'épaisseur non visible du côté intérieur est réalisée par des petits trous non débouchants obtenus de moulage dans le thermoplastique pour les zones à déchirer. Dans les zones d'articulation, une réduction d'épaisseur sur les lignes qui doivent constituer des charnières film lors de l'ouverture de la zone déchirée est aussi obtenue par moulage.

Par la mise en oeuvre du procédé de fabrication en soi connu, on obtient une réduction de coût et un accroissement de la sécurité. Par l'opération de surmoulage, le thermoplastique est intégré sur l'envers du décor et il est ainsi possible d'obtenir une fragmentation du plastique sans dispersion de morceaux de celui-ci à l'intérieur de l'habitacle lors d'un accident qui déclenche le coussin gonflable de sécurité.

D'autres caractéristiques et avantages de l'invention apparaîtront au cours de la description qui va suivre de modes particuliers de réalisation, donnés uniquement à titre d'exemples non limitatifs, en regard des dessins qui représentent :
- la figure 1, un schéma d'une pièce selon l'invention avec le support d'air bag avec un seul volet ouvrant;
- la figure 2, un schéma de prédécoupe de la pièce dans le premier mode de réalisation ;
- la figure 3, un second mode de réalisation à deux volets ouvrants;
- la figure 4, le schéma de pré découpe correspondant à celle de la figure 3.
- la figure 5, des vues en coupe d'une charnière et d'une pré-perforation.

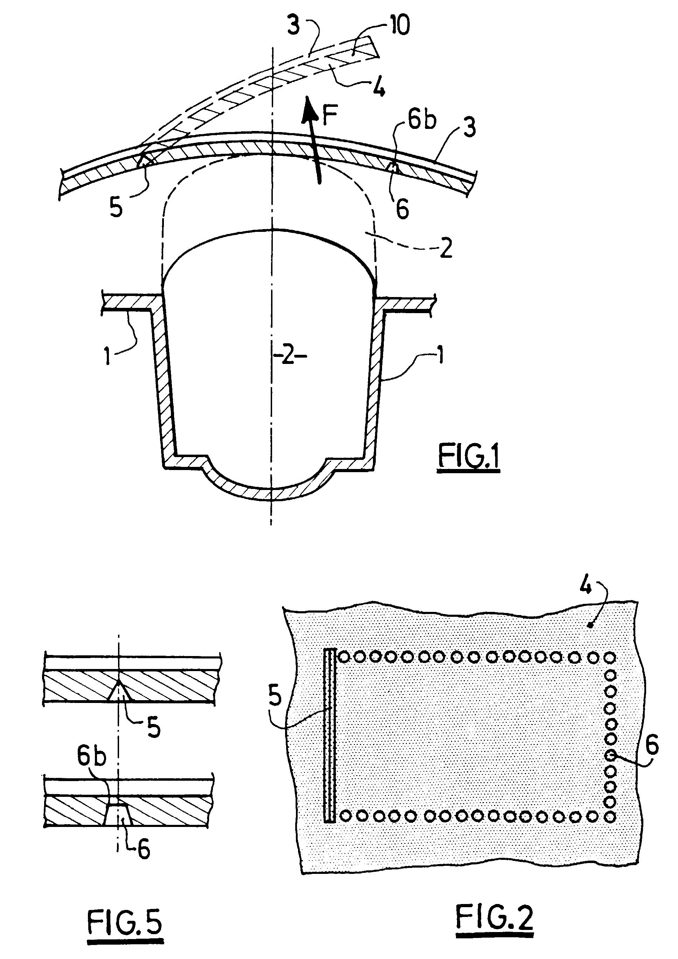

Sur l'ensemble des figures, les mêmes références désignent les mêmes éléments. Sur la figure 1 a été représenté le support 1 contenant un coussin gonflable 2. Ces pièces sont disposées au-dessous d'une pièce 4 constituant une partie de l'habitacle ou, par exemple, du centre du volant. La pièce 4 est recouverte par un décor 3 appliqué de préférence par le procédé "I.S.D". La partie mobile ou volet d'ouverture porte la référence 10.

Sur la figure 1, on distingue deux encoches qui, conformément à l'invention sont réalisées, lors de l'injection, du côté du coussin 2 c'est-à-dire sur la face normalement non visible de la pièce. L'encoche 5 représentée à plus grande échelle sur la figure 5 est en forme de "V" dont la pointe tournée vers l'extérieur est à une distance faible du décor 4 de manière à constituer, lors du gonflage du coussin gonflable de sécurité, une charnière au cours de laquelle pivotera le volet 10 déchiré par ce gonflage comme représenté en traits mixtes sur la figure 1. Ce volet 10 est prédécoupé dans la pièce 3 comme cela apparaît mieux sur la figure 2 par des pré-perforations 6 qui dans ce premier exemple sont configurées en "U". Comme cela apparaît mieux sur la figure 5, les pré-perforations 6 ont une section de forme tronconique. Elles sont conçues pour présenter, lors de l'ouverture et, après rupture de la partie 4, une arête tranchante 6b propre à découper le décor 3 qui, selon l'invention, est continu.

On a représenté sur la figure 1, en traits mixtes le début de l'ouverture du volet autour de la charnière 5, la force d'expansion du coussin gonflable de sécurité étant symbolisée par la flèche F, le coussin venant, bien entendu, au contact de la surface interne de la pièce 4. Sous l'influence de la pression exercée par celui-ci, les lignes "pointillées" se brisent et découpent le décor 3.

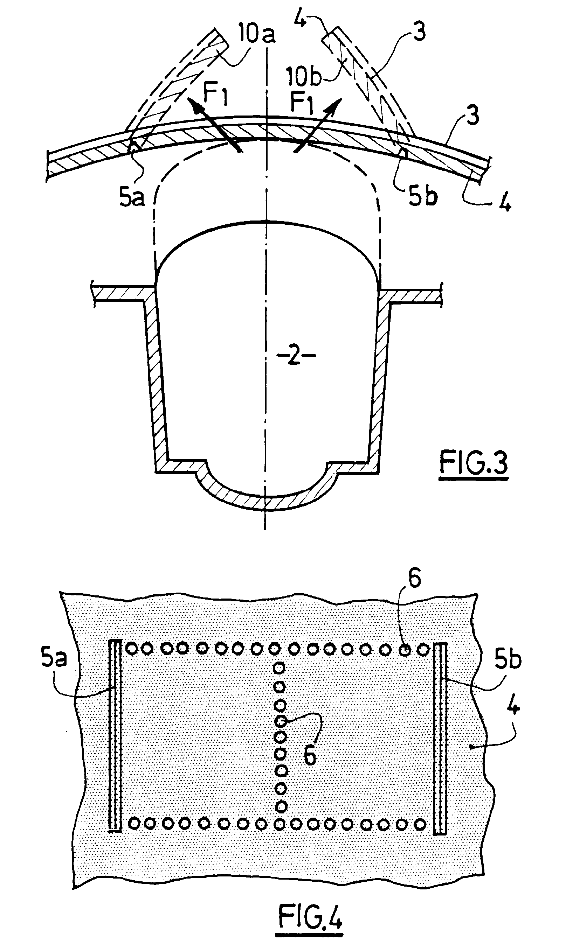

Lorsque le coussin gonflable est de dimensions plus importantes, il est souhaitable de recourir au mode de réalisation représenté sur les figures 3 et 4. Dans ce cas, la configuration des pré-perforations 6 est de forme générale en "H", celles-ci étant réparties selon deux lignes longitudinales et une ligne transversale qui, dans l'exemple représenté est centrale mais qui pourrait être, par exemple, au tiers de la longueur totale des volets si les deux volets gauche 10a et droite 10b n'étaient pas de même longueur. Aux extrémités des lignes longitudinales se trouvent deux charnières 5a, 5b constituées selon la même structure que la charnière 5 du mode de réalisation précédent. Le processus de fractionnement de la matière thermoplastique 4 et de coupe du décor 3 par les bords tangents des perforations 6 est le même que précédemment et est représenté en traits mixtes sur la figure 3, la pression du coussin s'exerçant selon les directions symbolisées par les flèches F1 et F2 sur les volets 10a et 10b.

Il va de soi que de nombreuses variantes peuvent être apportées, notamment par substitution de moyens techniques équivalents, sans sortir pour cela du cadre de l'invention.

## Revendications

1. Pièce thermoplastique de masquage d'un coussin gonflable de sécurité enfermé dans un support, caractérisée en ce qu'elle est obtenue par injection surmoulage décor dans un moule (1) de forme géométrique créant des zones de réduction d'épaisseur du côté tourné vers le coussin (2) afin que la pression de celui-ci, lors de son déploiement dans l'habitacle, rende possible l'ouverture d'au moins un volet (10) découpant le décor, caractérisée en ce que la réduction d'épaisseur est obtenue par formation du côté intérieur de pré-perforations (6) non débouchantes obtenues de moulage dans le thermoplastique pour les zones à déchirer, au moins une ligne (5) formant charnière lors de l'ouverture du volet (10).

2. Pièce thermoplastique selon la revendication 1, caractérisée en ce que les pré perforations (6) sont disposées, en forme de "U", aux extrémités de la charnière (5).

3. Pièce thermoplastique selon la revendication 1, caractérisée en ce que, lorsque deux volets sont prédécoupés, les pré-perforations (6) sont disposées en forme de "H" aux extrémités des charnières (5a,5b).

4. Pièce thermoplastique selon l'une des revendications 1 à 3, caractérisée en ce que, après ouverture de la couche de matière thermoplastique (4), les bords (6b) des perforations (6) sont tangents à et découpent le décor (3).
